(19) Europäisches Patentamt / European Patent Office / Office européen des brevets

(11) **EP 3 675 603 B1**

(12) **EUROPEAN PATENT SPECIFICATION**

(45) Date of publication and mention
of the grant of the patent:
**13.11.2024 Bulletin 2024/46**

(21) Application number: **19219127.8**

(22) Date of filing: **20.12.2019**

(51) International Patent Classification (IPC):
*H05B 45/10* (2020.01)    *H05B 45/14* (2020.01)
*H05B 45/46* (2020.01)

(52) Cooperative Patent Classification (CPC):
**H05B 45/10; H05B 45/14; H05B 45/46;**
Y02B 20/40; Y02B 70/10

(54) **DRIVING CIRCUIT AND DRIVING METHOD FOR DRIVING LIGHT EMITTING DIODE LOAD**

ANSTEUERUNGSSCHALTUNG UND ANSTEUERUNGSVERFAHREN ZUR ANSTEUERUNG
EINER LEUCHTDIODENLAST

CIRCUIT DE COMMANDE ET PROCÉDÉ DE COMMANDE DE CHARGE DE DIODE
ÉLECTROLUMINESCENTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.12.2018 CN 201811602750**

(43) Date of publication of application:
**01.07.2020 Bulletin 2020/27**

(73) Proprietor: **Silergy Semiconductor Technology
(Hangzhou) Ltd
Zhejiang 310051 (CN)**

(72) Inventors:
• **HUANG, Qiukai**
  **Hangzhou, Zhejiang 310051 (CN)**
• **WANG, Jianxin**
  **Hangzhou, Zhejiang 310051 (CN)**
• **CHEN, Huiqiang**
  **Hangzhou, Zhejiang 310051 (CN)**

(74) Representative: **Ström & Gulliksson AB
P.O. Box 793
220 07 Lund (SE)**

(56) References cited:
**US-A1- 2011 001 433    US-A1- 2013 278 166
US-A1- 2015 115 840    US-A1- 2018 310 376**

**Description**

**FIELD**

The present disclosure relates to the technical field of power electronics, and in particular to a driving circuit and a driving method for driving a light emitting diode (LED) loac In particular the invention relates to a driving circuit for driving a light emitting diode according to claim 1 and a method for driving a light emitting diode according to claim 10. Preferred embodiments of the invention are defined by the dependent claims.

**BACKGROUND**

Light emitting diodes (LEDs) are widely used as light sources due to high luminous efficiency, long life and low power consumption. As a constant current load, an LED load is required to be driven by a drive module capable of outputting a constant current.

Conventional LED driving methods include a linear driving method and a switching driving method. In the switching driving method, a switching converter is used to control the constant current output to drive the LED load. Although good constant current control can be achieved by the driving method using the switching converter, the switching converter must include at least a main power transistor, a rectifier tube, and a magnetic element such as an inductor or a transformer, which results in a high circuit cost and complicated control. In the linear driving method, a driving current flowing through the LED load may be controlled to be constant only by linear control for a power transistor.

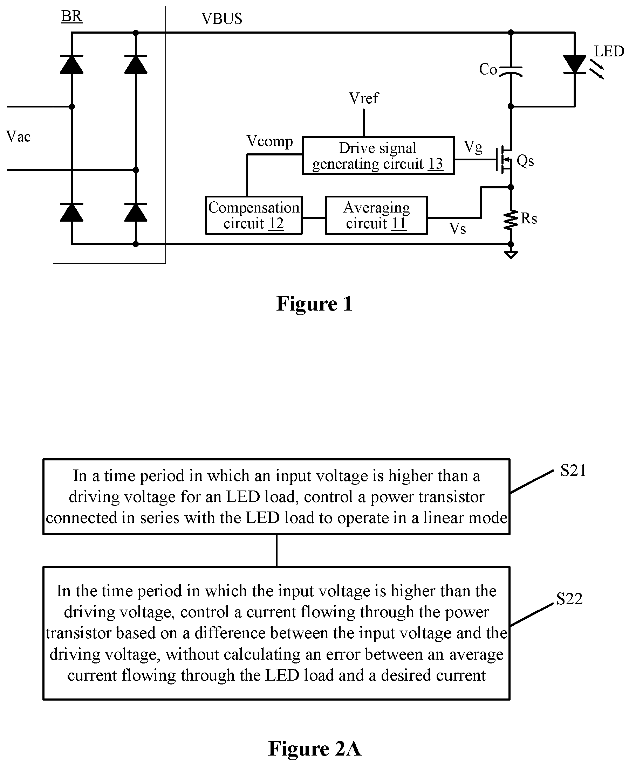

Figure 1 is a functional block diagram of an LED driving circuit in the conventional technology, in which the linear driving method is used to provide the driving current for the LED load. In an LED light source application scenario, the LED driving circuit is connected to an output end of a rectifier bridge BR to receive a direct current bus voltage VBUS. A filter capacitor may be connected to the output end of the rectifier bridge BR. The LED driving circuit includes: a sampling resistor Rs and a power transistor Qs that are connected in series with the LED load, and an output capacitor Co that is connected in parallel with the LED load, and a constant current control circuit.

In the linear driving method, no magnetic component such as an inductor or a transformer is required, and only a power transistor is required, such that fewer elements are required, thereby greatly reducing the circuit cost and having a good market prospect.

However, in order to achieve the constant current driving for the LED load, the control in the linear driving method is also complicated, and the effect of the constant current control is affected by factors such as ripple, input voltage fluctuation and dimmer performance.

Specifically, in order to achieve the constant current control, the constant current control circuit includes at least an averaging circuit 11, a compensation circuit 12, and a drive signal generating circuit 13.

The sampling resistor Rs is used to sample a current flowing through the LED load. The averaging circuit 11 is used to convert a sampling signal across the sampling resistor Rs into a current detection signal representing an average current flowing through the LED load. The average current corresponds to a brightness of the LED load. The compensation circuit 12 is used to calculate an error between the current detection signal and a reference current signal corresponding to a desired brightness of the LED load and perform an error compensation operation to generate a compensation signal Vcomp representing an error between a current average current and the desired current. The drive signal generating circuit 13 is used to generate a drive signal based on the compensation signal Vcomp to drive a control terminal of the power transistor Qs, so as to adjust the current flowing through the LED load.

In a case that the current average current is less than the desired current, the drive signal is increased by the closed-loop feedback control to increase the current flowing through the power transistor, so that the average current is increased and is maintained at the desired current. In a case that the current average current is greater than the desired current, the drive signal is decreased by the closed-loop feedback control to decrease the current flowing through the power transistor, so that the average current is decreased and is maintained at the desired current.

US 2018/310376 A1 discloses a method of constant current control for the LED load. Where, the LED driver can include silicon-controlled dimmer TRIAC, a rectifier circuit, constant current control circuit CON, and bleed resistor R1. Constant current control circuit CON can integrate an LED load and regulate a load current flowing through the LED load through transistor Q. In addition, load current sampling signal Ref1 can be sampled by resistor R2 coupled in series with transistor Q and fed back to error amplifier EA. Error amplifier Ea can achieve constant current control for transistor Q according to load current reference signal Ref1 and load current sampling signal Ref1.

It can be seen that, the linear driving method in the conventional technology is implemented by the closed-loop feedback control. The constant current control circuit adjusts the drive signal based on the error between the current average current and the desired current to change the real-time current. The average current is maintained at the desired current by the closed-loop adjustment, so that the LED load has the desired brightness. Further, in the conventional linear driving method, the real-time current flowing through the LED load is provided by a power transistor and is substantially fixed in a certain time period. That is, the real-time current is substantially fixed in a time period in which the direct current bus voltage VBUS is higher than the voltage across the LED load. In a case that the direct current bus voltage VBUS is much higher than the voltage across the LED load, the loss of the power transistor is large, greatly reducing the operating efficiency of the LED driving circuit.

## SUMMARY

In view of this, there are provided a linear driving circuit and a linear driving method for driving an LED load according to embodiments of the present disclosure, to solve a problem of complicated linear control in the conventional technology.

According to a first aspect of the present disclosure, a driving method for driving an LED load is provided. The driving method includes:

in a time period in which an input voltage varying periodically is higher than a driving voltage for the LED load, controlling a power transistor connected in series with the LED load to operate in a linear mode; and

in the time period, controlling a transistor current, which is instantaneous, flowing through the power transistor based on a difference between the input voltage and the driving voltage by an open-loop control, without calculating an error between an average current flowing through the LED load and a desired current, to reduce a conduction loss of the power transistor, and cause the average current flowing through the LED load to meet a predetermined requirement for driving the LED load to emit a light having a desired brightness, wherein the instantaneous current of the power transistor (Qs) is represented by a current detection signal (Vs).

In an embodiment, the transistor current in a first time period is controlled to be less than the transistor current in a second time period, where the difference between the input voltage and the driving voltage in the first time period is greater than the difference between the input voltage and the driving voltage in the second time period.

In an embodiment, a voltage threshold corresponding to the difference between the input voltage and the driving voltage is set. The transistor current in a first time period in which the difference between the input voltage and the driving voltage is greater than the voltage threshold is controlled to be less than the transistor current in a second time period in which the difference between the input voltage and the driving voltage is less than the voltage threshold.

In an embodiment, reference currents according to the predetermined requirement are set. The transistor current is controlled to switch between the reference currents based on a comparison between the voltage threshold and the difference between the input voltage and the driving voltage.

In an embodiment, during a half cycle in which the input voltage is in a rising phase, the transistor current is controlled to vary from one value to another value in a stepwise manner.

In an embodiment, during a half cycle in which the input voltage is in a falling phase, the transistor current is controlled to be symmetrical with the transistor current during the half cycle in which the input voltage is in the rising phase.

In an embodiment, a time length that the transistor current switches from one value to another value is extended to improve an electro magnetic compatibility (EMC) performance.

In an embodiment, the transistor current is controlled to vary from the one value to the another value in a ramp manner.

In an embodiment, when a duration during which the transistor current is maintained at a first current reaches a first time threshold, the transistor current is controlled to switch to a second current, where the first current is greater than the second current.

In an embodiment, after the transistor current switches to the second current, a duration during which the transistor current is maintained at the second current is detected. When the duration during which the transistor current is maintained at the second current reaches a second time threshold, the transistor current is controlled to switch to the first current.

In an embodiment, in the time period in which the input voltage is higher than the driving voltage, the transistor current is controlled to switch between a first current and a second current, where the first current is greater than the second current. Based on a comparison between a voltage threshold and the difference between the input voltage and the driving voltage, durations of the first current and the second current are adjusted, so that the average current meets a requirement for driving the LED load in a case that the input voltage varies.

In an embodiment, in a cycle, in the case that the input voltage is higher than the driving voltage,

if the difference between the input voltage and the driving voltage is less than the voltage threshold, the transistor current is controlled to be the first current; and

if the difference between the input voltage and the driving voltage is greater than the voltage threshold, the transistor current is controlled to be the second current.

In an embodiment, based on the input voltage and the driving voltage, the voltage threshold and a ratio of the first current to the second current are set, so that an error of the average current caused by variations of the durations of the first current and the second current is in a predetermined range, where the variations of the durations of the first current and the second current are caused by a variation of the input voltage and/or a variation of the driving voltage.

In an embodiment, the voltage threshold and the ratio of the first current to the second current are set based on the input voltage and a variation range of the driving voltage, so that the error of the average current caused by the variations of the durations of the first current and the second current is in the predetermined range, with the variations of the durations of the first current and the second current being caused by the variation of the driving voltage; or

the voltage threshold and the ratio of the first current to the second current are set based on the driving voltage and a variation range of the input voltage, so that the error of the average current caused by the variations of the durations of the first current and the second current is in the predetermined range, with the variations of the durations of the first current and the second current being caused by the variation of the input voltage; or

the voltage threshold and the ratio of the first current to the second current are set based on a variation range of the input voltage and a variation range of the driving voltage, so that the error of the average current caused by the variations of the durations of the first current and the second current is in the predetermined range, with the variations of the durations of the first current and the second current being caused by the variation of the input voltage and the variation of the driving voltage.

According to a second aspect of the present disclosure, a driving circuit for driving an LED load is provided. The driving circuit includes: a power transistor and a control circuit, where

the power transistor is connected in series with the LED load and is configured to receive an input voltage varying periodically; and

the control circuit is configured to: in a time period in which the input voltage is higher than a driving voltage for the LED load, control the power transistor to operate in a linear mode; and in the period, control a change of an instantaneous current flowing through the power transistor (Qs) based on a difference between the input voltage and the driving voltage by an open-loop control, without calculating an error between an average current flowing through the LED load and a desired current, to reduce a conduction loss of the power transistor, and cause the average current flowing through the LED load to meet a predetermined requirement for driving the LED load to emit a light having a desired brightness, wherein the instantaneous current of the power transistor (Qs) is represented by a current detection signal (Vs).

In an embodiment, the control circuit includes a drive signal generating circuit. The drive signal generating circuit is configured to generate a drive signal based on the difference between the input voltage and the driving voltage, to control the power transistor so that the transistor current in in a first time period is controlled to be less than the transistor current in a second time period, where the difference between the input voltage and the driving voltage in the first time period is greater than the difference between the input voltage and the driving voltage in the second time period.

In an embodiment, the control circuit includes a selecting circuit. The selecting circuit is configured to: select one of reference signals representing desired values of the transistor current based on the difference between the input voltage and the driving voltage, and deliver the selected reference signal to the drive signal generating circuit.

In an embodiment, the driving circuit further includes a first detecting circuit connected in series with the power transistor. The first detecting circuit is configured to detect an instantaneous current flowing through the power transistor and generate a current detection signal based on the detected instantaneous current. The drive signal generating circuit is configured to generate the drive signal based on the current detection signal and the selected reference signal, to drive a control terminal of the power transistor, so that the transistor current coincides with the selected reference signal.

In an embodiment, the selecting circuit includes switches and a logic circuit. The switches are arranged in one-to-one correspondence with the reference signals. The logic circuit is configured to generate control signals for controlling switching states of the switches based on the difference between the input voltage and the driving voltage.

In an embodiment, the driving circuit further includes a buffer circuit. The buffer circuit is coupled between the selecting circuit and the drive signal generating circuit, and is configured to extend a time length used for switching between the reference signals.

In an embodiment, the buffer circuit includes a filter circuit. The filter circuit is configured to filter a voltage signal the selected reference signal, so that the transistor current switches from one value to another value in a ramp manner.

In an embodiment, the control circuit includes a timing circuit. The timing circuit is configured to control a maximum time length of a duration during which the transistor current is maintained at a current.

In an embodiment, the control circuit is configured to control the transistor current to vary from one value to another value in a stepwise manner during a half cycle in which the input voltage is in a rising phase.

In an embodiment, the control circuit is configured to control the transistor current during a half cycle in which the input voltage is in a falling phase to be symmetrical with the transistor current during the half cycle in which the input voltage is in the rising phase.

In an embodiment, the drive signal generating circuit is configured to: in the time period in which the input voltage is higher than the driving voltage, control the transistor current to be switched between a first current and a second current by using the drive signal, where the first current is greater than the second current; and adjust durations of the first current and the second current based on a comparison between a voltage threshold and the difference between the input voltage and the driving voltage, so that the average current meets a requirement for driving the LED load in a case that the input voltage varies.

In an embodiment, the drive signal generating circuit is configured to: in a cycle, in the case that the input voltage is higher than the driving voltage,

if the difference between the input voltage and the driving voltage is less than the voltage threshold, the transistor current is controlled to be the first current; and

if the difference between the input voltage and the driving voltage is greater than the voltage threshold, the transistor current is controlled to be the second current.

In an embodiment, the control circuit is configured to: set the voltage threshold and a ratio of the first current to the second current based on the input voltage and the driving voltage, so that an error of the average current caused by variations of the durations of the first current and the second current is in a predetermined range, where the variations of the durations of the first current and the second current are caused by a variation of the input voltage and/or a variation of the driving voltage.

In an embodiment, the control circuit is configured to:

set the voltage threshold and the ratio of the first current to the second current based on the input voltage and a variation range of the driving voltage, so that the error of the average current caused by the variations of the durations of the first current and the second current is in the predetermined range, with the variations of the durations of the first current and the second current being caused by the variation of the driving voltage; or

set the voltage threshold and the ratio of the first current to the second current based on the driving voltage and a variation range of the input voltage, so that the error of the average current caused by the variations of the durations of the first current and the second current is in the predetermined range, with the variations of the durations of the first current and the second current being caused by the variation of the input voltage; or

set the voltage threshold and the ratio of the first current to the second current based on a variation range of the input voltage and a variation range of the driving voltage, so that the error of the average current caused by the variations of the durations of the first current and the second current is in the predetermined range, with the variations of the durations of the first current and the second current being caused by the variation of the input voltage and the variation of the driving voltage.

In an embodiment, the control circuit includes a timing circuit. The timing circuit is configured to: when the duration of the first current reaches a time length represented by a first time threshold, control the transistor current to switch from the first current to the second current.

In an embodiment, the timing circuit is configured to: after the transistor current switches from the first current to the second current,
when the duration of the second current reaches a time length represented by a second time threshold, control the transistor current to switch from the second current to the first current.

Compared with the LED linear driving method by closed-loop feedback control in the conventional technology, the power transistor is controlled by the open-loop control in the driving method and the driving circuit for driving an LED load according to the embodiments of the present disclosure. The current of the power transistor is controlled based on the difference between the input voltage and the driving voltage, without calculating the error between the current average current of the LED load and the desired current by a closed-loop circuit. That is, the real-time current flowing through the LED load is controlled to be not fixed but vary with the difference between the input voltage and the driving voltage, to reduce the conduction loss of the power transistor. Further, the durations of the currents of different values are adjusted, so that the average current flowing through the LED load can meet the requirement for driving the LED load to emit a light having a desired brightness, and a good output current adjustment rate can be obtained in the process that the input voltage varies.

## BRIEF DESCRIPTION OF THE DRAWINGS

The above and other objects, features and advantages of the present disclosure are apparent from the following description given in conjunction with the drawings. In the drawing:

Figure 1 is a functional block diagram of a linear LED driving circuit in the conventional technology;

Figure 2A is a flowchart of a driving method for driving an LED load according to a first embodiment of the present disclosure;

Figure 2B is an operational waveform diagram of the driving method for driving an LED load according to the first embodiment of the present disclosure shown in Figure 2A;

Figure 3 is an operational waveform diagram of a driving method for driving an LED load according to a second embodiment of the present disclosure;

Figure 4 is an operational waveform diagram of a driving method for driving an LED load according to a third embodiment of the present disclosure;

Figure 5 is a functional block diagram of a driving circuit for driving an LED load according to the first embodiment of the present disclosure;

Figure 6 is a functional block diagram of a driving circuit for driving an LED load according to the second embodiment of the present disclosure; and

Figure 7 is a functional block diagram of a driving circuit for driving an LED load according to the third embodiment of the present disclosure.

## DETAILED DESCRIPTION OF EMBODIMENTS

The present disclosure is described below based on embodiments, and the present disclosure is not limited to the embodiments. In the following description of the present disclosure, specific details are described in detail. The present disclosure can be fully understood by those skilled in the art without the description of these details. Well-known methods, processes, flows, components and circuits are not described in detail to avoid obscuring the essence of the present disclosure.

Further, it should be understood by those skilled in the art that, the drawings herein are only for illustration, and the drawings are not necessarily drawn to scale.

It should further be understood that in the following description, a "circuit" indicates a conductive loop formed by at least one component or sub-circuit by electrical connection or electromagnetic connection. In a case that a component or circuit is described as being "connected to" another component or being "connected" between two terminals, the component or circuit may be coupled or connected to another component directly or via an intermediate component. The connection between the two components may be physical connection, logical connection, or a combination thereof. In addition, in a case that the component is described as being "directly coupled to" or "directly connected to" another component, it is indicated that no intermediate component exists between the two components.

Figure 2A is a flowchart of a driving method for driving an LED load according to a first embodiment of the present disclosure. In this embodiment, the driving method for driving an LED load includes the following steps S21 to S22.

In S21, in a time period in which an input voltage is higher than a driving voltage for the LED load, a power transistor connected in series with the LED load is controlled to operate in a linear mode.

The power transistor is connected in series with the LED load to form a current path, and is used to receive the input voltage varying periodically from an input end.

The input voltage may be a sinusoidal half-wave input voltage. An alternating current input voltage may be rectified by a rectifying circuit to form the sinusoidal half-wave input voltage.

In S22, in the time period in which the input voltage is higher than the driving voltage, a transistor current flowing

**EP 3 675 603 B1**

through the power transistor is controlled based on a difference between the input voltage and the driving voltage, without calculating an error between an average current flowing through the LED load and a desired current.

In a case that the difference between the input voltage and the driving voltage is large, the current flowing through the power transistor is decreased, to reduce a conduction loss of the power transistor, and cause the average current flowing through the LED load to meet a predetermined requirement for driving the LED load to emit a light having a desired brightness.

In a specific implementation, the transistor current generated by the power transistor is controlled based on the difference between the input voltage and the driving voltage, so that the transistor current in a time period in which the difference between the input voltage and the driving voltage is large is less than the transistor current in a time period in which the difference between the input voltage and the driving voltage is small. The transistor current is decreased as the difference between the input voltage and the driving voltage increases, to reduce the conduction loss of the power transistor.

The difference between the input voltage and the driving voltage may be represented by a preset voltage threshold. Voltage thresholds with different values increasing sequentially may be set according to an actual control requirement, and a threshold interval is formed between two adjacent voltage thresholds. For each threshold interval, a reference current for the transistor current may be set correspondingly, to meet a requirement that the transistor current is decreased as the difference between the input voltage and the driving voltage increases. Based on a threshold interval in which the difference between the input voltage and the driving voltage is located, the transistor current is controlled to be a reference current corresponding to the threshold interval.

In a specific implementation, during a half cycle in which the input voltage is in a rising phase, the transistor current is controlled to be decreased stepwise. During a half cycle in which the input voltage is in a falling phase, the transistor current is controlled to be symmetrical with the transistor current during the half cycle in which the input voltage is in the rising phase.

With the driving method for driving an LED load in this embodiment, in the time period in which the input voltage is higher than the driving voltage, the real-time current flowing through the power transistor may have multiple different values depending on the difference between the input voltage and the driving voltage. In this way, the current flowing through the power transistor may be controlled to be small if the difference between the input voltage and the driving voltage is large, and the current flowing through the power transistor may be controlled to be large if the difference between the input voltage and the driving voltage is small, reducing the conduction loss of the power transistor, while causing the average current flowing through the LED load to meet the requirement for driving the LED load to emit a light having a desired brightness.

The specific operational process is described below by taking a case that the real-time current flowing through the LED load includes a first current with a large value and a second current with a small value as an example.

In a cycle, when the input voltage is higher than the driving voltage, the power transistor is turned on.

A magnitude of the difference between the input voltage and the driving voltage may be represented by a comparison between the difference and a preset voltage threshold.

A length of a time period in which the current flowing through the power transistor is the first current is controlled to not exceed a length of a time period in which the difference between the input voltage and the driving voltage is less than the preset voltage threshold. A length of a time period in which the current flowing through the power transistor is the second current is controlled to not exceed a length of a time period in which the difference between the input voltage and the driving voltage is greater than the preset voltage threshold.

A voltage across the power transistor is approximately equal to the difference between the input voltage and the driving voltage. In the case that the voltage across the power transistor is large, the current flowing through the power transistor is the second current with a small value, so that the conduction loss of the power transistor is greatly reduced.

In addition, in the cycle, the current flowing through the power transistor may also be the first current with a large value. Although the value of the first current is large, the voltage across the power transistor in the time period in which the current flowing through the power transistor is the first current is small. In this case, the conduction loss is relatively low. Further, the average current of the first current with a large value and the second current with a small value in one cycle can meet the requirement for driving the LED load to emit a light having a desired brightness.

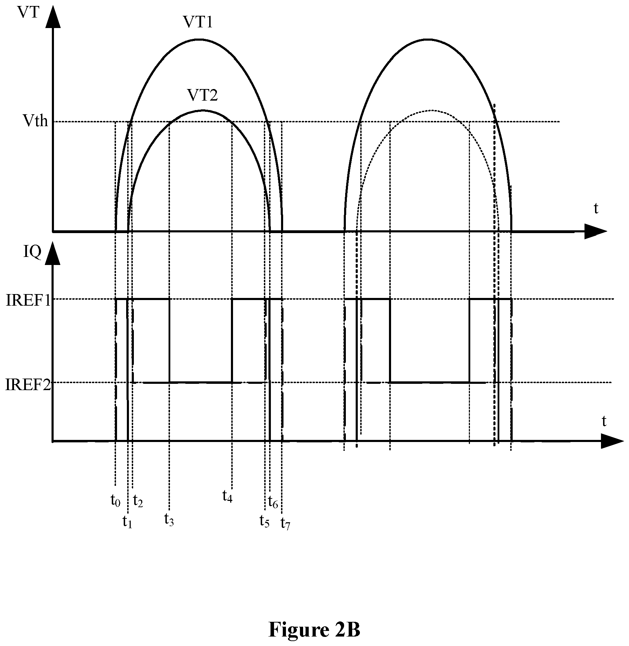

Reference is made to Figure 2B, which is an operational waveform diagram of the driving method for driving an LED load according to the first embodiment of the present disclosure shown in Figure 2A. In Figure 2B, VT represents the voltage across the power transistor, Vth represents the set voltage threshold, IQ represents the current flowing through the power transistor, IREF 1 represents the first current with a large value that is preset, and IREF2 represents the second current with a small value that is preset.

It can be understood that, the voltage across the power transistor may be approximately equal to the difference between the input voltage VBUS and the driving voltage VLED. In a case that the LED load does not change, the driving voltage VLED may be considered as a fixed value. In this case, after the power transistor is turned on, that is, after the input voltage VBUS is higher than the driving voltage VLED, the voltage VT varies with the input voltage VBUS.

7

The voltage threshold Vth is set to be a fixed value. In a case that the input voltage VBUS is a first sinusoidal half-wave voltage having a small effective value, when the input voltage VBUS is higher than the driving voltage VLED, a voltage VT2 starts increasing from zero and varies with the input voltage VBUS. In a time period from a time instant t1 to a time instant t3, the voltage VT2 is lower than the voltage threshold Vth, which indicates that the voltage across the power transistor is small, and the current IQ in the time period from the time instant t1 to the time instant t3 may be the first current IREF 1 with a large value, to prevent excessive conduction power loss. In a time period from the time instant t3 to a time instant t4, the voltage VT2 is higher than the voltage threshold Vth, which indicates that the voltage across the power transistor is large, and the current IQ in the time period from the time instant t3 to the time instant t4 may be the second current IREF2 with a small value, to prevent excessive conduction power loss. Similarly, in a falling phase of the voltage VT2, in a time period from the time instant t4 to a time instant t6, the voltage VT2 is lower than the voltage threshold Vth again, which indicates that the voltage across the power transistor is small, and the current IQ may be the first current IREF1 with a large value.

In a case that the input voltage VBUS is a second sinusoidal half-wave voltage having a large effective value, the time instant when the input voltage VBUS is greater than the driving voltage VLED precedes by that in the case that the input voltage VBUS is the first sinusoidal half-wave voltage having a small effective value. A voltage VT1 starts increasing from zero at a time instant t0 and varies with the input voltage VBUS. In a time period from the time period t0 to a time instant t2, the voltage VT1 is lower than the voltage threshold Vth, which indicates that the voltage across the power transistor is small, and the current IQ in the time period from the time period t0 to the time instant t2 may be the first current IREF 1 with a large value, to prevent excessive conduction power loss. In a time period from the time instant t2 to a time instant t5, the voltage VT1 is higher than the voltage threshold Vth, which indicates that the voltage across the power transistor is large, and the current IQ in the time period from the time instant t2 to the time instant t5 may be the second current IREF2 with a small value, to prevent excessive conduction power loss. Similarly, in a falling phase of the voltage VT1, in a time period from the time instant t5 to a time instant t7, the voltage VT1 is lower than the voltage threshold Vth again, which indicates that the voltage across the power transistor is small, and the current IQ in the time period from the time instant t5 to the time instant t7 may be the first current IREF1 with a large value.

It can be seen that, in the case that the effective value of the input voltage VBUS is large, a duration during which the current IQ is the first current IREF 1 with a large value is decreased, and a duration during which the current IQ is the second current IREF2 with a small value is increased, to reduce the conduction power loss of the power transistor.

In addition, the average current flowing through the LED load corresponding to the brightness of the LED load is an average current in a cycle.

In the case that the effective value of the alternating current voltage corresponding to the input voltage VBUS is small, an average current Iavg1 is expressed by the following formula (1).

$$Iavg1=[2*(t3-t1)*IREF1+(t4-t3)*IREF2]/Ts \qquad (1)$$

In the case that the effective value of the alternating current voltage corresponding to the input voltage VBUS is large, an average current Iavg2 is expressed by the following formula (2).

$$Iavg2=[2*(t2-t0)*IREF1+(t5-t2)*IREF2]/Ts \qquad (2)$$

In the formulas (1) and (2), Ts represents a power frequency cycle of the alternating current voltage, Iavg1 and Iavg2 respectively represent averages of the first current and the second current in one power frequency cycle. It can be seen from the above formula (1) and formula (2) that, the duration (t3-t1) is greater than the duration (t2-t0), and the duration (t4-t3) is less than the duration (t5-t2). Based on a variation range of the input voltage VBUS, an appropriate voltage threshold Vth and a ratio of the first current to the second current are set, so that the variation of the average current caused by the variation of the input voltage VBUS is limited in a small range, for example, 5%. The small variation range meets the predetermined requirement for driving the LED load to emit a light having a desired brightness.

It should further be understood that, in different lighting environments, a light source may be implemented by different LED loads. For example, the number of LED strings may vary, so that the driving voltage for the LED load varies. In a case that the input voltage VBUS does not vary, the difference between the input voltage and the driving voltage for the LED load, i.e., the voltage VT across the power transistor, varies with the driving voltage VLED. If the driving voltage increases, the voltage VT is decreases. If the driving voltage decreases, the voltage VT increases. Durations of the first current and the second current vary accordingly. Similarly, as shown by the formula (1) and formula (2), the voltage threshold and the ratio of the first current to the second current are set based on the input voltage and the variation range of the driving voltage, so that the error of the average current is still controlled in a small range, for example, 5%, although the durations of the first current and the second current may vary due to the variation of the driving voltage. The small variation range meets the predetermined requirement for driving the LED load to emit a light having a desired brightness.

Further, in a case that both the input voltage VBUS and the driving voltage VLED vary in a certain range, similarly, as shown by the formulas (1) and (2), the voltage threshold and the ratio of the first current to the second current are set based on the variation range of the input voltage and the variation range of the driving voltage, so that the errors of the average currents of the first current and the second current are controlled in a small range, for example, 5%. The small variation range meets the predetermined requirement for driving the LED load to emit a light having a desired brightness.

Compared with the LED linear driving method by closed-loop feedback control in the conventional technology, the power transistor is controlled by the open-loop control in the driving method for driving an LED load according to the embodiments of the present disclosure. The current of the power transistor is controlled based on the difference between the input voltage and the driving voltage, without calculating the error between the current average current of the LED load and the desired current by a closed-loop circuit. That is, the real-time current flowing through the LED load is controlled to be not fixed but vary with the difference between the input voltage and the driving voltage, to reduce the conduction loss of the power transistor. Further, the durations of the currents of different values are adjusted, so that the average current flowing through the LED load can meet the requirement for driving the LED load to emit a light having a desired brightness, and a good output current adjustment rate can be obtained in the process that the input voltage varies.

A driving method for driving an LED load is further provided according to a second embodiment of the present disclosure. Based on the embodiment shown in Figure 2A, the driving method for driving an LED load according to the second embodiment may further include a step of extending a time length used for the transistor current switching between different current values, to obtain a good EMC performance. In the current switching process, the transistor current is increased or decreased from a current value to another current value in a ramp manner, rather than stepwise varying between two different current values.

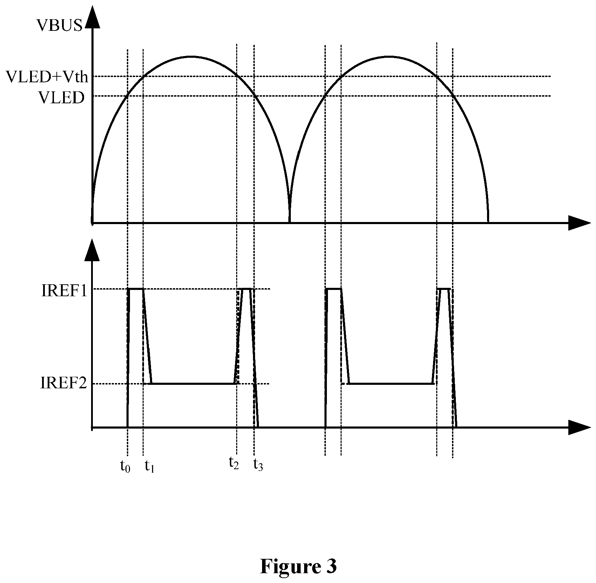

Reference is made to Figure 3, which is an operational waveform diagram of the driving method for driving an LED load according to the second embodiment. The following description is given by still taking the case that the real-time current flowing through the LED load includes a first current with a large value and a second current with a small value as an example.

At a time instant t0, the input voltage VBUS is higher than the driving voltage VLED for the LED load, and the power transistor is turned on to allow a current to flow through the LED load. In a time period from the time instant t0 to a time instant 11, the difference between the input voltage VBUS and the driving voltage VLED is smaller than the voltage threshold Vth, which indicates that the voltage across the power transistor is small, and the current IQ in the time period from the time instant t0 to the time instant t1 may be the first current IREF1 with a large value, to prevent excessive conduction power loss. At the time instant 11, the difference between the input voltage VBUS and the driving voltage VLED starts to be greater than the voltage threshold Vth, and the current IQ is required to switch to the second current IREF2 with a small value from the first current IREF1. According to this embodiment, a time length used for the current IQ switching from the first current to the second current is extended, and the current IQ is slowly decreased to the second current from the first current. For example, the current may be decreased to the second current from the first current at a certain decreasing slope. Similarly, at a time instant t2, the difference between the input voltage VBUS and the driving voltage VLED starts to be less than the voltage threshold Vth, and the current IQ is required to switch to the first current with a large value from the second current. According to this embodiment, a time length used for the current IQ switching from the second current IREF2 to the first current IREF1 is extended, and the current IQ is slowly increased to the first current IREF1 from the second current IREF2. For example, the current may be increased to the first current IREF1 from the second current IREF2 at a certain increasing slope. In this way, the current varies slowly, and the EMC performance is greatly improved.

In addition, at the time instant t0, the input voltage VBUS starts to be higher than the driving voltage VLED, and the current IQ starts to switch from zero to the first current IREF 1. The time length used for the current switching from zero to the first current IREF 1 may be extended, and the current is slowly increased to the first current from zero. Similarly, at a time instant t3, the input voltage VBUS starts to be lower than the driving voltage VLED for the LED load, and the current IQ starts to switch to zero from the first current. The time length used for the current switching from the first current to zero may be extended, and the current is slowly decreased to zero from the first current. In this way, the EMC performance of the circuit is further improved.

A driving method for driving an LED load is further provided according to a third embodiment of the present disclosure. Based on the embodiment shown in Figure 2A, the driving method for driving an LED load according to the third embodiment may further include steps of controlling the duration of the current with a large value, to better ensure the normal driving for the LED load without being affected by the variation of the input voltage and other factors such as a dimming angle.

The controlling process may be performed by: timing a duration during which the current flowing through the power transistor is the first current with a large value; and controlling the current flowing through the power transistor to switch from the first current to the second current with a small value when the duration during which the current flowing through the power transistor is the first current reaches a first time threshold.

If a degree of decreasing in the input voltage is out of a preset range, or the LED driving system has a deep dimming depth in the case of having a dimming function, the duration during which the voltage across the power transistor is lower than the voltage threshold is relative long. A maximum time length of the duration of the current with a large value is limited with the driving method in this embodiment, avoiding the case that the requirement for driving the LED load to emit a light having a desired brightness is not met due to an excessively high average current.

Further, if the time length of the duration of the current with a large value is limited, a time length of the duration of the current with a small value may be limited. In this case, the driving method further includes: controlling the current flowing through the power transistor to switch to the second current from the first current when a first duration during which the current flowing through the power transistor is the first current reaches a first time threshold; timing the duration during which the current flowing through the power transistor is the second current; and controlling the current flowing through the power transistor to switch to the first current from the second current when the time length of the duration during which the current flowing through the power transistor is the second current reaches a second time threshold.

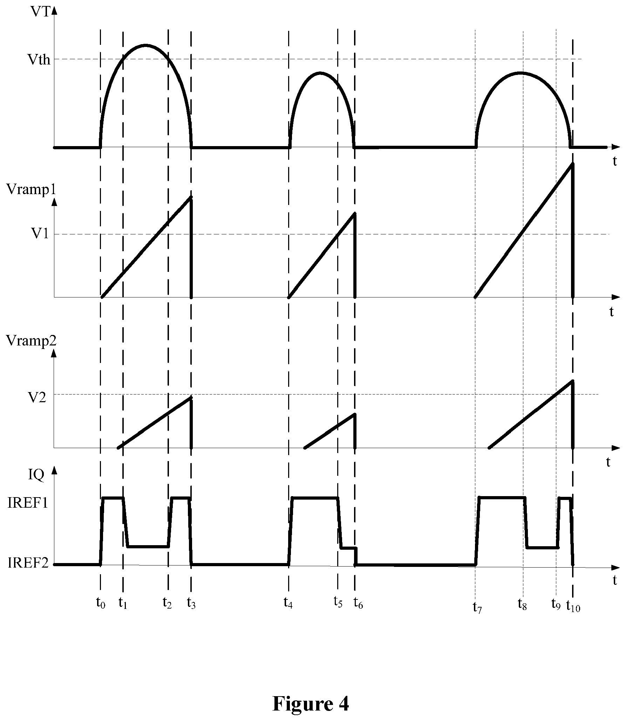

Reference is made to Figure 4, which is an operational waveform diagram of the driving method for driving an LED load according to the third embodiment. The following description is given by still taking the case that the real-time current flowing through the LED load includes a first current with a large value and a second current with a small value as an example.

In a time period from a time instant t0 to a time instant t3, a length of the durations [t0-t1] and [t2-t3] of the first current IREF1 is less than a first time threshold, and a length of the duration of the second current IREF2 is a length of a time period from a time instant t1 to a time instant t2 in which the voltage VT is higher than the voltage threshold Vth.

In a time period from a time instant t4 to a time instant t6, a length of the duration [t4-t5] of the first current IREF1 is limited to a time length represented by the first time threshold. In a time period from a time instant t5 to the time instant t6, the transistor current is maintained as the second current IREF2.

In a time period from a time instant t7 to a time instant t10, a length of the duration [t7-t8] of the first current IREF1 is limited to the time length represented by the first time threshold. After the time length represented by the first time threshold ends, the transistor current is decreased to the second current from the first current. A time length of the duration [t8-t9] of the second current IREF2 is limited to a time length represented by the second time threshold. After the time length represented by the second time threshold ends, the transistor current is increased to the first current from the second current, and is maintained at the first current in a time period from a time instant t9 to the time instant t10.

The first time threshold and the second time threshold may be implemented in multiple manners, for example, by a timing circuit including a timer, or an analog circuit. A capacitor is charged by a constant current source, and a duration during which a ramp voltage across the capacitor is increased to a preset value is timed. As shown in Figure 4, the duration of the first current may be expressed as a duration during which a ramp voltage Vramp1 is increased to a first time threshold V1 at an increasing slope, and the duration of the second current may be expressed as a duration during which a ramp voltage Vramp2 is increased to a second time threshold V2 at an increasing slope.

Compared with the closed-loop control method in the conventional technology, an open-loop control method for constant current control can be achieved in a simpler manner with the driving method for driving an LED load according to the embodiments of the present disclosure.

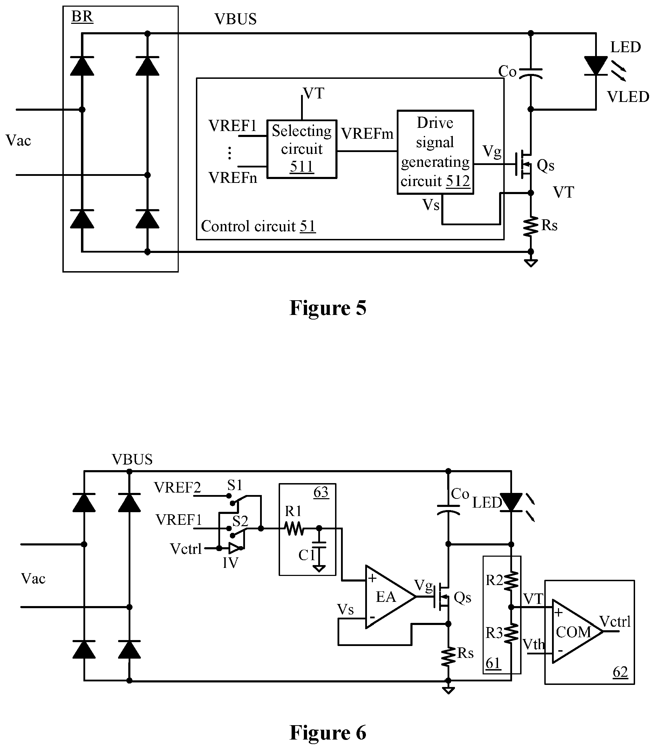

Reference is made to Figure 5, which is a functional block diagram of a driving circuit for driving an LED load according to the first embodiment of the present disclosure. In this embodiment, the driving circuit for driving an LED load includes a power transistor Qs and a control circuit 51.

The power transistor Qs is connected in series with the LED load and is configured to receive an input voltage VBUS varying periodically.

The input voltage VBUS may be generated by rectifying an alternating current voltage Vac by a rectifying circuit BR, and has a sinusoidal half-wave waveform.

In a dimming application scenario, the input voltage VBUS is a phase-cutting sinusoidal half-wave direct current voltage. For example, a dimmer chops a portion of each waveform of the alternating current voltage Vac to pass the remainder of the waveform to the rectifying circuit BR which provides the phase-cutting sinusoidal half-wave direct current voltage.

The control circuit 51 is configured to: control the power transistor Qs to operate in a linear mode in a case that the input voltage VBUS is higher than a driving voltage VLED for the LED load. The control circuit 51 operates in an open-loop control mode, and is configured to control a current (which is referred to as a transistor current) flowing through the power transistor based on a difference between the input voltage VBUS and the driving voltage VLED, without calculating an error between an average current flowing through the LED load and a desired current. In a case that the difference between the input voltage VBUS and the driving voltage VLED is large, the control circuit 51 controls the current flowing through the power transistor to be small, to reduce a conduction loss of the power transistor, and cause the average current flowing through the LED load to meet a predetermined requirement for driving the LED load to emit a light having a desired brightness.

In a time period in which the input voltage VBUS is higher than the driving voltage VLED for the LED load, the real-time current flowing through the power transistor may have multiple different values depending on the difference between the input voltage VBUS and the driving voltage VLED. In this way, the current flowing through the power transistor may be controlled to be small if the difference between the input voltage VBUS and the driving voltage VLED is large, and the current flowing through the power transistor may be controlled to be large if the difference between the input voltage VBUS and the driving voltage VLED is small, reducing the conduction loss of the power transistor, while causing the average current flowing through the LED load to meet the requirement for driving the LED load to emit a light having a desired brightness.

In an implementation, the control circuit 51 includes a selecting circuit 511 and a drive signal generating circuit 512.

The selecting circuit 511 is configured to receive a set of reference signals VREF 1 to VREFn representing expected values of the transistor current and a voltage detection signal VT representing the difference between the input voltage VBUS and the driving voltage VLED, where n is an integer greater than 1. The selecting circuit 511 is further configured to select, based on the voltage detection signal VT, a reference signal VREFm from the reference signals VREF1 to VREFn.

The drive signal generating circuit 512 is configured to receive the selected reference signal VREFm and a current detection signal Vs representing the transistor current, where the current detection signal Vs represents a value of an instantaneous current flowing through the power transistor Qs. The drive signal generating circuit 512 is further configured to generate a drive signal Vg based on a difference between the reference signal VREFm and the current detection signal Vs, to drive a control terminal of the power transistor Qs, to control the power transistor Qs to operate in the linear mode and control the real-time current flowing through the power transistor Qs to correspond to the reference signal VREFm.

The current detection signal Vs may be implemented in the following manner. A first detecting circuit is configured as a detection resistor Rs connected in series with the power transistor Qs is provided, and in a case that the power transistor Qs is turned on, a voltage across the detection resistor Rs functions as the current detection signal Vs.

An operational waveform diagram of the driving circuit for driving an LED load shown in Figure 5 is similar to the operational waveform diagram shown in Figure 2B, which is not described again. Compared with the LED linear driving method by closed-loop feedback control in the conventional technology, the power transistor is controlled by the open-loop control in the driving circuit for driving an LED load according to the embodiments of the present disclosure. The current of the power transistor is controlled based on the difference between the input voltage and the driving voltage, without calculating the error between the current average current of the LED load and the desired current by a closed-loop circuit. That is, the instantaneous current flowing through the LED load is controlled to be not fixed but vary with the difference between the input voltage and the driving voltage, to reduce the conduction loss of the power transistor. Further, the durations of the currents of different values are adjusted, so that the average current flowing through the LED load can meet the requirement for driving the LED load to emit a light having a desired brightness, and a good output current adjustment rate can be obtained.

Reference is made to Figure 6, which is a functional block diagram of a driving circuit for driving an LED load according to the second embodiment of the present disclosure. In this embodiment, the description is made by taking a case that the number of the reference signals is two as an example. The transistor current includes a first current with a large value and a second current with a small value. A magnitude of the difference between the input voltage VBUS and the driving voltage VLED is represented by a comparison between the difference and a preset voltage threshold. If the difference between the input voltage VBUS and the driving voltage VLED is less than the voltage threshold, the instantaneous current flowing through the power transistor Qs is controlled to be the first current with a large value. If the difference between the input voltage VBUS and the driving voltage VLED is greater than the voltage threshold, the instantaneous current flowing through the power transistor Qs is controlled to be the second current with a small value.

Based on the embodiment shown in Figure 5, the driving circuit for driving an LED load according to the second embodiment further includes: a detecting circuit 61 and a comparing circuit 62.

The detecting circuit 61 is configured to acquire the voltage detection signal VT representing the difference between the input voltage VBUS and the driving voltage VLED.

In an implementation, the detecting circuit 61 is configured as a resistor divider network including a resistor R2 and a resistor R3, and the detecting circuit 61 is coupled in parallel to the power transistor Qs to detect a voltage at the drain terminal of the power transistor Qs, in order to generate the voltage detection signal VT.

The comparing circuit 62 is configured to compare the received voltage detection signal VT with the voltage threshold Vth, and generate a comparison signal Vctrl based on the comparison result thereof to determine the difference between the input voltage VBUS and the driving voltage VLED.

The selecting circuit receives the comparison signal Vctrl to control the switching between the reference signal VREF 1 corresponding to the first current and the reference signal VREF2 corresponding to the second current. In an implementation, the selecting circuit includes a switch S 1, a switch S2, and a logic circuit including an inverter IV

A second terminal of the switch S 1 is connected to a second terminal of the switch S2.

A first terminal of the switch S1 receives the reference signal VREF1, and a first terminal of the switch S2 receives the reference signal VREF2.

The switching states of the switch S 1 and the switch S2 are complementary to each other based on the comparison signal Vctrl.

The control process is described as follows. In a case that the voltage detection signal VT is greater than the voltage threshold Vth, that is, in a case that the difference between the input voltage VBUS and the driving voltage VLED is large, the switch S 1 is controlled to be turned on and the switch S2 is controlled to be turned off based on the comparison signal Vctrl, and the reference signal VREF2 with a small value is selected as a reference signal to be transmitted to the drive signal generating circuit. In a case that the voltage detection signal VT is less than the voltage threshold Vth, that is, in a case that the difference between the input voltage VBUS and the driving voltage VLED is small, the switch S2 is controlled to be turned on and the switch S 1 is controlled to be turned off based on the comparison signal Vctrl, and the reference signal VREF 1 with a large value is selected as a reference signal to be transmitted to the drive signal generating circuit.

It should be understood that, in this embodiment, the detecting circuit determines the difference between the input voltage VBUS and the driving voltage VLED by detecting the voltages across the power transistor Qs. Other detecting circuits capable of realizing the above function are applicable to this embodiment. For example, the detecting circuit may also determine the difference between the input voltage VBUS and the driving voltage VLED by detecting the alternating current voltage Vac or the input voltage VBUS.

The drive signal generating circuit includes an amplifier EA. The amplifier EA generates the drive signal Vg based on the difference between the received reference signal and the current detection signal Vs, to drive the control terminal of the power transistor Qs. A power terminal of the power transistor Qs is coupled to the ground via the detection resistor Rs, so that the real-time current flowing through the power transistor Qs is controlled to a current corresponding to the reference signal, i.e., one of the first current and the second current.

In this embodiment, the time length used for the switching between the first current and the second current is extended to improve the EMC performance.

In an embodiment, the driving circuit further includes a buffer circuit 63 arranged between the selecting circuit and the drive signal generating circuit, to extend a time length used for switching between the reference signals outputted by the selecting circuit. In an implementation, the buffer circuit includes a resistor R1 and a capacitor C1 that are connected in series between the output terminal of the selecting circuit and the ground. A voltage at a common node between the resistor R1 and the capacitor C1 is transferred to the drive signal generating circuit.

In a case that the reference signal is switched from the reference signal VREF2 to the reference signal VREF1, the reference signal VREF1 is filtered, the reference signal is slowly increased from the reference signal VREF2 to the reference signal VREF1 at an increasing slope, so that the transistor current is slowly increased from the second current to the first current. Similarly, in a case that the reference signal is switched from the reference signal VREF1 to the reference signal VREF2, the reference signal VREF2 is filtered, the reference signal is slowly decreased from the reference signal VREF1 to the reference signal VREF2 at a decreasing slope, so that the transistor current is slowly decreased from the first current to the second current, obtaining a good EMC performance. An operational waveform diagram of the driving circuit for driving an LED load shown in Figure 6 is similar to the operational waveform diagram shown in Figure 3, which is not described again.

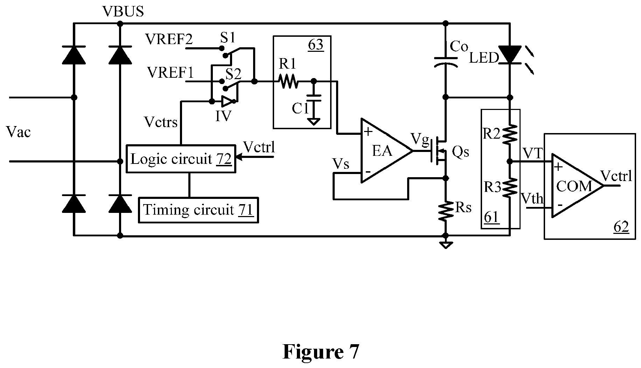

Reference is made to Figure 7, which is a functional block diagram of a driving circuit for driving an LED load according to the third embodiment of the present disclosure. In this embodiment, the description is made by still taking the case that the number of the reference signals is two as an example.

Based on the embodiment shown in Figure 6, the driving circuit for driving an LED load according to the third embodiment further includes a timing circuit 71, to limit the duration during which the transistor current is the first current with a large value.

The timing circuit 71 is configured to: time the duration of the first current based on the first time threshold; and generate a first timing signal when the duration of the first current reaches the first time threshold, to control the transistor current to switch from the first current to the second current with a small value.

The driving circuit for driving an LED load according to the third embodiment further includes a logic circuit 72. The logic circuit 72 is configured to generate a control signal Vctrs based on the comparison signal Vctrl and the first timing signal, to control the switches S 1 and S2, so as to achieve the switching between the reference signal VREF1 and the reference signal VREF2.

In some application scenarios, if a degree of decreasing in the input voltage is out of a preset range, or the LED driving system has a deep dimming depth in the case of having a dimming function, the voltage across the power transistor is relative small, and the duration during which the voltage across the power transistor is lower than the voltage threshold is relative long.

A maximum time length of the duration during which the current flowing through the power transistor is the first current is limited with the timing circuit in this embodiment, avoiding the case that the requirement for driving the LED load to emit a light having a desired brightness is not met due to an excessively high average current.

Further, if the time length of the duration of the first current is limited to a time length represented by the first time threshold, the timing circuit may further limit a time length of the duration of the second current based on the second time threshold. When the time length of the duration of the second current reaches a time length represented by the second time threshold, the transistor current switches to the first current with a large value from the second current. An operational waveform diagram of the driving circuit for driving an LED load in this embodiment is similar to the operational waveform diagram shown in Figure 4, which is not described again.

The timing circuit 71 may be implemented in multiple different manners, for example, by an analog circuit or a digital circuit.

In the embodiment shown in Figure 7, the timing circuit 71 may control the maximum time length of the duration of the first current by limiting a length of a conduction time period of the switch S2, so that the duration during which the transistor current is the first current is not excessively long.

For example, a capacitor is charged by a constant current source, and a duration during which a ramp voltage across the capacitor is increased to the first time threshold is timed, to acquire the first timing signal. The above control may be achieved by the logic circuit 72 including an OR gate based on the first timing signal and the comparison signal Vctrl.

Further, the timing circuit 71 may control a maximum time length of the duration of the second current by limiting a length of a conduction time period of the switch S 1, so that the duration during which the transistor current is the second current is not excessively long after the time length of the duration of the first current is limited to the time length represented by the first time threshold.

For example, a capacitor is charged by a constant current source, and a duration during which a ramp voltage across the capacitor is increased to the second time threshold is timed, to acquire the second timing signal. The above control may be achieved by the logic circuit 72 including an OR gate based on the second timing signal and the comparison signal Vctrl.

The driving method and the driving circuit for driving an LED load provided in the present disclosure are described in detail by various embodiments. It should be understood that the power transistor Qs may be implemented by a metal-oxide-semiconductor field effect transistor (MOSFET) transistor or other type of controllable transistor. Rather than the closed-loop feedback control method in the conventional technology, the constant current control for the LED load is achieved in an open-loop control mode in the present disclosure. In the open-loop control mode, the voltage threshold and a ratio between the reference signals are set based on the variation range of the input voltage and/or the variation range of the driving voltage, without calculating the error between the current average current of the LED load and the desired current, so that the average current meets the requirement for driving the LED load to emit a light having a desired brightness.

It should be noted that, unless otherwise indicated in the context, the words "including", "comprising", and the like, in the specification and the claims, should be interpreted as being inclusive rather than being exclusive or exhaustive, i.e., "including but not limited to".

In the description of the present disclosure, it should be understood that, the terms "first", "second" and the like are only used herein to distinguish one entity or operation from another, and are not to be construed as indicating or implying relative importance. In addition, in the present disclosure, the word "multiple" indicates two or more unless otherwise specified.

Embodiments in the present disclosure are described above, and not all details are described in detail in the embodiments. The present disclosure is not limited to the specific embodiments. It is apparent that various modifications and variations may be made based on the above description. The embodiments are selected and described in detail in this specification, to explain the principles and practical applications of the present disclosure, so that those skilled in the art can make good use of the present disclosure and the modifications based on the present disclosure. The present disclosure is limited only by the scope of the appended claims.

## Claims

1.  A driving circuit for driving a light emitting diode, LED, load, the driving circuit comprising:

    the LED load;
    a power transistor (Qs) connected in series with the LED load and configured to receive an input voltage (VBUS) varying periodically; and
    a control circuit (51), **characterized in that**, the control circuit (51) is configured to:

obtain a voltage between two ends of the LED load, the voltage between two ends of the LED load being a driving voltage (VLED) for the LED load;

obtain the input voltage (VBUS); and

calculate a difference between the input voltage (VBUS) and the driving voltage (VLED) for the LED load;

in a time period in which the input voltage (VBUS) is higher than the driving voltage (VLED) for the LED load, control the power transistor (Qs) to operate in a linear mode; and

in the time period, control a change of an instantaneous current flowing through the power transistor (Qs) based on a difference between the input voltage (VBUS) and the driving voltage (VLED) for the LED load by an open-loop control, without calculating an error between an average current flowing through the LED load and a desired current, to cause the average current flowing through the LED load to meet a predetermined requirement for driving the LED load to emit a light having a desired brightness;

wherein controlling the change of the instantaneous current flowing through the power transistor (Qs) based on the difference between the input voltage (VBUS) and the driving voltage (VLED) for the LED load by the open-loop control comprises:

when the difference between the input voltage (VBUS) and the driving voltage (VLED) for the LED load is a first difference, controlling the instantaneous current flowing through the power transistor (Qs) to be a first current; and

when the difference between the input voltage (VBUS) and the driving voltage (VLED) for the LED load is a second difference, controlling the instantaneous current flowing through the power transistor (Qs) to be a second current, wherein the first difference is less than the second difference, and the first current is greater than the second current.

2. The driving circuit according to claim 1, wherein the control circuit (51) comprises:
a drive signal generating circuit (512) configured to generate a drive signal (Vg) based on the difference between the input voltage (VBUS) and the driving voltage (VLED) for the LED, to control the power transistor (Qs) so that the instantaneous current flowing through the power transistor (Qs) in a first time period is controlled to be less than the instantaneous current flowing through the power transistor (Qs) in a second time period, wherein the difference between the input voltage (VBUS) and the driving voltage (VLED) for the LED load in the first time period is greater than the difference between the input voltage (VBUS) and the driving voltage (VLED) for the LED load in the second time period.

3. The driving circuit according to claim 2, wherein the control circuit comprises:
a selecting circuit (511) configured to: select one of reference signals (VREF 1-VREFn) representing desired values of the instantaneous current flowing through the power transistor (Qs) based on the difference between the input voltage (VBUS) and the driving voltage (VLED) for the LED load, and deliver the selected reference signal (VREFm) to the drive signal generating circuit (512).

4. The driving circuit according to claim 3, wherein the selecting circuit (511) comprises:

switches arranged in one-to-one correspondence with the reference signals (VREF1-VREFn); and
a logic circuit (72) configured to generate control signals for controlling switching states of the switches (S1, S2) based on the difference between the input voltage (VBUS) and the driving voltage (VLED) for the LED load.

5. The driving circuit according to claim 3, further comprising:
a buffer circuit (63) coupled between the selecting circuit (511) and the driving signal generating circuit (512) and configured to extend a time length used for switching between the reference signals (VREF1-VREFn).

6. The driving circuit according to claim 2, wherein the drive signal generating circuit (512) is configured to:

in the time period in which the input voltage (VBUS) is higher than the driving voltage (VLED) for the LED load, control the instantaneous current flowing through the power transistor (Qs) to be switched between the first current and the second current by using the drive signal; and

adjust durations of the first current and the second current based on a comparison between a voltage threshold (Vth) and the difference between the input voltage (VBUS) and the driving voltage (VLED) for the LED load, so that the average current meets a requirement for driving the LED load in a case that the input voltage varies.

7. The driving circuit according to claim 6, wherein the drive signal generating circuit (512) is configured to: in a cycle, in the case that the input voltage (VBUS) is higher than the driving voltage (VLED) for the LED load,

when the difference between the input voltage (VBUS) and the driving voltage (VLED) for the LED load is less than the voltage threshold (Vth), the instantaneous current flowing through the power transistor (Qs) is controlled to be the first current; and
when the difference between the input voltage (VBUS) and the driving voltage (VLED) for the LED load is greater than the voltage threshold (Vth), the instantaneous current flowing through the power transistor (Qs) is controlled to be the second current.

8. The driving circuit according to claim 6, wherein the control circuit comprises:
a timing circuit (71) configured to: when the duration of the first current reaches a time length represented by a first time threshold, control the instantaneous current flowing through the power transistor (Qs) to switch from the first current to the second current.

9. The driving circuit according to claim 8, wherein the timing circuit (71) is configured to: after the instantaneous current flowing through the power transistor (Qs) switches from the first current to the second current,
when the duration of the second current reaches a time length represented by a second time threshold, control the instantaneous current flowing through the power transistor (Qs) to switch from the second current to the first current.

10. A driving method for driving a light emitting diode, LED, load, **characterized by**, the driving method comprising:

in a time period in which an input voltage (VBUS) varying periodically is higher than a driving voltage (VLED) for the LED load, controlling a power transistor (Qs) connected in series with the LED load to operate in a linear mode; and
in the time period, controlling a change of the instantaneous current flowing through the power transistor (Qs) based on a difference between the input voltage (VBUS) and the driving voltage (VLED) for the LED load by an open-loop control, without calculating an error between an average current flowing through the LED load and a desired current, to reduce a conduction loss of the power transistor (Qs), and cause the average current flowing through the LED load to meet a predetermined requirement for driving the LED load to emit a light having a desired brightness;
wherein controlling the change of the instantaneous current flowing through the power transistor (Qs) based on the difference between the input voltage (VBUS) and the driving voltage (VLED) for the LED load by the open-loop control comprises:

when the difference between the input voltage (VBUS) and the driving voltage (VLED) for the LED load is a first difference, controlling the instantaneous current flowing through the power transistor (Qs) to be a first current; and
when the difference between the input voltage (VBUS) and the driving voltage (VLED) for the LED load is a second difference, controlling the instantaneous current flowing through the power transistor (Qs) to be a second current, wherein the first difference is less than the second difference, and the first current is greater than the second current.

11. The driving method according to claim 10, wherein
the instantaneous current flowing through the power transistor (Qs) in a first time period is controlled to be less than the instantaneous current flowing through the power transistor (Qs) in a second time period, wherein the difference between the input voltage (VBUS) and the driving voltage (VLED) for the LED load in the first time period is greater than the difference between the input voltage (VBUS) and the driving voltage (VLED) for the LED load in the second time period.

12. The driving method according to claim 10, wherein

a voltage threshold (Vth) corresponding to the difference between the input voltage (VBUS) and the driving voltage (VLED) for the LED load is set; and
the instantaneous current flowing through the power transistor (Qs) in a first time period in which the difference between the input voltage (VBUS) and the driving voltage (VLED) for the LED load is greater than the voltage threshold (Vth) is controlled to be less than the instantaneous current flowing through the power transistor (Qs) in a second time period in which the difference between the input voltage (VBUS) and the driving voltage (VLED)

for the LED load is less than the voltage threshold (Vth).

**13.** The driving method according to claim 12, wherein

reference currents according to the predetermined requirement are set; and
the instantaneous current flowing through the power transistor (Qs) is controlled to switch between the reference currents based on a comparison between the voltage threshold (Vth) and the difference between the input voltage (VBUS) and the driving voltage (VLED) for the LED load.

**14.** The driving method according to claim 12, wherein
during a half cycle in which the input voltage (VBUS) is in a rising phase, the instantaneous current flowing through the power transistor (Qs) is controlled to vary from one value to another value in a stepwise manner.

**15.** The driving method according to claim 14, wherein
during a half cycle in which the input voltage (VBUS) is in a falling phase, the instantaneous current flowing through the power transistor (Qs) is controlled to be symmetrical with the instantaneous current flowing through the power transistor (Qs) during the half cycle in which the input voltage (VBUS) is in the rising phase.

**16.** The driving method according to claim 10, wherein
a time length that the instantaneous current flowing through the power transistor (Qs) switches from one value to another value is extended to improve an electromagnetic compatibility, EMC, performance.

**17.** The driving method according to claim 16, wherein
the instantaneous current flowing through the power transistor (Qs) is controlled to vary from the one value to the another value in a ramp manner.

**18.** The driving method according to claim 10, wherein
when a duration during which the instantaneous current flowing through the power transistor (Qs) is maintained at a first current reaches a first time threshold, the instantaneous current flowing through the power transistor (Qs) is controlled to switch to a second current, wherein the first current is greater than the second current.

**19.** The driving method according to claim 18, wherein

after the instantaneous current flowing through the power transistor (Qs) switches to the second current, a duration during which the instantaneous current flowing through the power transistor (Qs) is maintained at the second current is detected; and
when the duration during which the instantaneous current flowing through the power transistor (Qs) is maintained at the second current reaches a second time threshold, the instantaneous current flowing through the power transistor (Qs) is controlled to switch to the first current.

**20.** The driving method according to claim 10, wherein

in the time period in which the input voltage (VBUS) is higher than the driving voltage (VLED) for the LED load, the instantaneous current flowing through the power transistor (Qs) is controlled to switch between a first current and a second current, wherein the first current is greater than the second current; and
based on a comparison between the voltage threshold (Vth) and the difference between the input voltage (VBUS) and the driving voltage (VLED) for the LED load, durations of the first current and the second current are adjusted, so that the average current meets a requirement for driving the LED load in a case that the input voltage (VBUS) varies.

**21.** The driving method according to claim 20, wherein

in a cycle, in the case that the input voltage (VBUS) is higher than the driving voltage,
if the difference between the input voltage (VBUS) and the driving voltage (VLED) for the LED load is less than the voltage threshold (Vth), the instantaneous current flowing through the power transistor (Qs) is controlled to be the first current; and
if the difference between the input voltage (VBUS) and the driving voltage (VLED) for the LED load is greater than the voltage threshold (Vth), the instantaneous current flowing through the power transistor (Qs) is controlled to be the second current.

**Patentansprüche**

1. Treiberschaltung zum Treiben einer Leuchtdioden-, LED-, Last, wobei die Treiberschaltung umfasst:

   die LED-Last;
   einen Leistungstransistor (Qs), der in Reihe mit der LED-Last geschaltet und ausgebildet ist, eine periodisch schwankende Eingangsspannung (VBUS) zu empfangen; und
   eine Steuerschaltung (51), **dadurch gekennzeichnet, dass** die Steuerschaltung (51) ausgebildet ist:

   eine Spannung zwischen zwei Enden der LED-Last zu erhalten, wobei die Spannung zwischen den zwei Enden der LED-Last eine Treiberspannung (VLED) für die LED-Last ist;
   die Eingangsspannung (VBUS) zu erhalten; und
   eine Differenz zwischen der Eingangsspannung (VBUS) und der Treiberspannung (VLED) für die LED-Last zu berechnen;
   in einem Zeitraum, in dem die Eingangsspannung (VBUS) höher als die Treiberspannung (VLED) für die LED-Last ist, den Leistungstransistor (Qs) zu steuern, in einem linearen Modus zu arbeiten; und
   in dem Zeitraum, eine Änderung eines Momentanstroms zu steuern, der durch den Leistungstransistor (Qs) fließt, basierend auf einer Differenz zwischen der Eingangsspannung (VBUS) und der Treiberspannung (VLED) für die LED-Last durch eine offene Schleifensteuerung, ohne einen Fehler zwischen einem durchschnittlichen Strom, der durch die LED-Last fließt, und einem gewünschten Strom zu berechnen, um zu bewirken, dass der durchschnittliche Strom, der durch die LED-Last fließt, eine vorbestimmte Anforderung zum Antreiben der LED-Last erfüllt, um ein Licht mit einer gewünschten Helligkeit auszustrahlen;

   wobei das Steuern der Änderung des Momentanstroms, der durch den Leistungstransistor (Qs) fließt, basierend auf der Differenz zwischen der Eingangsspannung (VBUS) und der Treiberspannung (VLED) für die LED-Last durch die offene Schleifensteuerung umfasst:

   wenn die Differenz zwischen der Eingangsspannung (VBUS) und der Treiberspannung (VLED) für die LED-Last eine erste Differenz ist, Steuern des Momentanstroms, der durch den Leistungstransistor (Qs) fließt, ein erster Strom zu sein; und
   wenn die Differenz zwischen der Eingangsspannung (VBUS) und der Treiberspannung (VLED) für die LED-Last eine zweite Differenz ist, Steuern des Momentanstroms, der durch den Leistungstransistor (Qs) fließt, ein zweiter Strom zu sein, wobei die erste Differenz kleiner als die zweite Differenz ist und der erste Strom größer als der zweite Strom ist.

2. Treiberschaltung nach Anspruch 1, wobei die Steuerschaltung (51) umfasst:
   eine Treibersignal-Erzeugungsschaltung (512), die ausgebildet ist, ein Treibersignal (Vg) basierend auf der Differenz zwischen der Eingangsspannung (VBUS) und der Treiberspannung (VLED) für die LED zu erzeugen, den Leistungstransistor (Qs) so zu steuern, dass der Momentanstrom, der in einem ersten Zeitraum durch den Leistungstransistor (Qs) fließt, gesteuert wird, kleiner als der Momentanstrom zu sein, der in einem zweiten Zeitraum durch den Leistungstransistor (Qs) fließt, wobei die Differenz zwischen der Eingangsspannung (VBUS) und der Treiberspannung (VLED) für die LED-Last in dem ersten Zeitraum größer als die Differenz zwischen der Eingangsspannung (VBUS) und der Treiberspannung (VLED) für die LED-Last in dem zweiten Zeitraum ist.

3. Treiberschaltung nach Anspruch 2, wobei die Steuerschaltung umfasst:
   eine Auswahlschaltung (511), die ausgebildet ist: von Referenzsignalen (VREF1-VREFn), die gewünschte Werte des durch den Leistungstransistor (Qs) fließenden Momentanstroms darstellen, eines auszuwählen, basierend auf der Differenz zwischen der Eingangsspannung (VBUS) und der Treiberspannung (VLED) für die LED-Last, und das ausgewählte Referenzsignal (VREFm) an die Treibersignal-Erzeugungsschaltung (512) zu übermitteln.

4. Treiberschaltung nach Anspruch 3, wobei die Auswahlschaltung (511) umfasst:

   Schalter, die in einer Eins-zu-eins-Entsprechung zu den Referenzsignalen (VREF1-VREFn) angeordnet sind, und
   eine Logikschaltung (72), die ausgebildet ist, Steuersignale zum Steuern der Schaltzustände der Schalter (S1, S2) basierend auf der Differenz zwischen der Eingangsspannung (VBUS) und der Treiberspannung (VLED) für die LED-Last zu erzeugen.

5. Treiberschaltung nach Anspruch 3, ferner umfassend:
eine Pufferschaltung (63), die zwischen die Auswahlschaltung (511) und die Treibersignal-Erzeugungsschaltung (512) gekoppelt ist und ausgebildet ist, eine zum Umschalten zwischen den Referenzsignalen (VREF1-VREFn) verwendete Zeitspanne zu verlängern.

6. Treiberschaltung nach Anspruch 2, wobei die Treibersignal-Erzeugungsschaltung (512) ausgebildet ist:

in der Zeitdauer, in der die Eingangsspannung (VBUS) höher als die Treiberspannung (VLED) für die LED-Last ist, den Momentanstrom, der durch den Leistungstransistor (Qs) fließt, zu steuern, zwischen dem ersten Strom und dem zweiten Strom durch Verwendung des Treibersignals umgeschaltet zu werden; und
Anpassen einer jeweiligen Dauer des ersten Stroms und des zweiten Stroms basierend auf einem Vergleich zwischen einem Spannungsschwellenwert (Vth) und der Differenz zwischen der Eingangsspannung (VBUS) und der Treiberspannung (VLED) für die LED-Last, sodass der Durchschnittsstrom eine Anforderung zum Antreiben der LED-Last erfüllt, in einem Fall, in dem die Eingangsspannung variiert.

7. Treiberschaltung nach Anspruch 6, wobei die Treibersignal-Erzeugungsschaltung (512) ausgebildet ist: in einem Zyklus, in dem Fall, in dem die Eingangsspannung (VBUS) höher als die Treiberspannung (VLED) für die LED-Last ist,

wenn die Differenz zwischen der Eingangsspannung (VBUS) und der Treiberspannung (VLED) für die LED-Last kleiner als der Spannungsschwellenwert (Vth) ist, den Momentanstrom, der durch den Leistungstransistor (Qs) fließt, zu steuern, der erste Strom zu sein, und
wenn die Differenz zwischen der Eingangsspannung (VBUS) und der Treiberspannung (VLED) für die LED-Last größer als der Spannungsschwellenwert (Vth) ist, den Momentanstrom, der durch den Leistungstransistor (Qs) fließt, zu steuern, der zweite Strom zu sein.

8. Treiberschaltung nach Anspruch 6, wobei die Steuerschaltung umfasst:
eine Zeitschaltung (71), die ausgebildet ist: wenn die Dauer des ersten Stroms eine durch einen ersten Zeitschwellenwert dargestellte Zeitlänge erreicht, den Momentanstrom, der durch den Leistungstransistor (Qs) fließt, zu steuern, von dem ersten Strom auf den zweiten Strom umzuschalten.

9. Treiberschaltung nach Anspruch 8, wobei die Zeitschaltung (71) ausgebildet ist:
nachdem der Momentanstrom, der durch den Leistungstransistor (Qs) fließt, von dem ersten Strom auf den zweiten Strom umschaltet,
wenn die Dauer des zweiten Stroms eine Zeitlänge erreicht, die durch einen zweiten Zeitschwellenwert dargestellt wird, den Momentanstrom zu steuern, der durch den Leistungstransistor (Qs) fließt, von dem zweiten Strom auf den ersten Strom umzuschalten.

10. Treiberverfahren zum Treiben einer Leuchtdioden-, LED-, Last, **dadurch gekennzeichnet, dass** das Treiberverfahren umfasst:

in einem Zeitraum, in dem eine periodisch schwankende Eingangsspannung (VBUS) höher als eine Treiberspannung (VLED) für die LED-Last ist, Steuern eines in Reihe mit der LED-Last geschalteten Leistungstransistors (Qs), in einem linearen Modus zu arbeiten; und
in dem Zeitraum, Steuern einer Änderung des Momentanstroms, der durch den Leistungstransistor (Qs) fließt, basierend auf einer Differenz zwischen der Eingangsspannung (VBUS) und der Treiberspannung (VLED) für die LED-Last durch eine offene Schleifensteuerung, ohne einen Fehler zwischen einem durchschnittlichen Strom, der durch die LED-Last fließt, und einem gewünschten Strom zu berechnen, um einen Leitungsverlust des Leistungstransistors (Qs) zu verringern und zu bewirken, dass der durchschnittliche Strom, der durch die LED-Last fließt, eine vorbestimmte Anforderung zum Antreiben der LED-Last erfüllt, um ein Licht mit einer gewünschten Helligkeit auszustrahlen;
wobei das Steuern der Änderung des Momentanstroms, der durch den Leistungstransistor (Qs) fließt, basierend auf der Differenz zwischen der Eingangsspannung (VBUS) und der Treiberspannung (VLED) für die LED-Last durch die offene Schleifensteuerung umfasst:

wenn die Differenz zwischen der Eingangsspannung (VBUS) und der Treiberspannung (VLED) für die LED-Last eine erste Differenz ist, Steuern des Momentanstroms, der durch den Leistungstransistor (Qs) fließt, ein erster Strom zu sein; und

wenn die Differenz zwischen der Eingangsspannung (VBUS) und der Treiberspannung (VLED) für die LED-Last eine zweite Differenz ist, Steuern des Momentanstroms, der durch den Leistungstransistor (Qs) fließt, ein zweiter Strom zu sein, wobei die erste Differenz kleiner als die zweite Differenz ist und der erste Strom größer als der zweite Strom ist.

11. Treiberverfahren nach Anspruch 10, wobei

der Momentanstrom, der in einem ersten Zeitraum durch den Leistungstransistor (Qs) fließt, gesteuert wird, kleiner als der Momentanstrom zu sein, der in einem zweiten Zeitraum durch den Leistungstransistor (Qs) fließt, wobei die Differenz zwischen der Eingangsspannung (VBUS) und der Treiberspannung (VLED) für die LED-Last in dem ersten Zeitraum größer als die Differenz zwischen der Eingangsspannung (VBUS) und der Treiberspannung (VLED) für die LED-Last in dem zweiten Zeitraum ist.

12. Treiberverfahren nach Anspruch 10, wobei

ein Spannungsschwellenwert (Vth) entsprechend der Differenz zwischen der Eingangsspannung (VBUS) und der Treiberspannung (VLED) für die LED-Last eingestellt wird; und

der Momentanstrom, der durch den Leistungstransistor (Qs) in einem ersten Zeitraum fließt, in welchem die Differenz zwischen der Eingangsspannung (VBUS) und der Treiberspannung (VLED) für die LED-Last größer als der Spannungsschwellenwert (Vth) ist, gesteuert wird, kleiner als der Momentanstrom zu sein, der durch den Leistungstransistor (Qs) in einem zweiten Zeitraum fließt, in welchem die Differenz zwischen der Eingangsspannung (VBUS) und der Treiberspannung (VLED) für die LED-Last kleiner als der Spannungsschwellenwert (Vth) ist.

13. Treiberverfahren nach Anspruch 12, wobei

Referenzströme entsprechend der vorbestimmten Anforderung eingestellt werden, und

der Momentanstrom, der durch den Leistungstransistor (Qs) fließt, gesteuert wird, basierend auf einem Vergleich zwischen dem Spannungsschwellenwert (Vth) und der Differenz zwischen der Eingangsspannung (VBUS) und der Treiberspannung (VLED) für die LED-Last zwischen den Referenzströmen umzuschalten.

14. Treiberverfahren nach Anspruch 12, wobei

während eines Halbzyklus, in welchem sich die Eingangsspannung (VBUS) in einer Anstiegsphase befindet, der Momentanstrom, der durch den Leistungstransistor (Qs) fließt, gesteuert wird, schrittweise von einem Wert zum anderen Wert zu variieren.

15. Treiberverfahren nach Anspruch 14, wobei

während eines Halbzyklus, in welchem sich die Eingangsspannung (VBUS) in einer fallenden Phase befindet, der Momentanstrom, der durch den Leistungstransistor (Qs) fließt, gesteuert wird, symmetrisch zum Momentanstrom zu sein, der durch den Leistungstransistor (Qs) während des Halbzyklus fließt, in welchem sich die Eingangsspannung (VBUS) in der steigenden Phase befindet.

16. Treiberverfahren nach Anspruch 10, wobei

eine Zeitspanne, in welcher der durch den Leistungstransistor fließende Strom (Qs) von einem Wert auf einen anderen Wert wechselt, verlängert wird, um eine elektromagnetische Verträglichkeit, EMC, zu verbessern.

17. Treiberverfahren nach Anspruch 16, wobei

der Momentanstrom, der durch den Leistungstransistor (Qs) fließt, gesteuert wird, rampenförmig von einem Wert zu dem anderen Wert zu variieren.

18. Treiberverfahren nach Anspruch 10, wobei, wenn eine Dauer, während der der durch den Leistungstransistor (Qs) fließende Momentanstrom auf einem ersten Strom gehalten wird, einen ersten Zeitschwellenwert erreicht, der durch den Leistungstransistor (Qs) fließende Momentanstrom gesteuert wird, auf einen zweiten Strom umzuschalten, wobei der erste Strom größer als der zweite Strom ist.

19. Treiberverfahren nach Anspruch 18, wobei

nachdem der durch den Leistungtransistor (Qs) fließende Momentanstrom auf den zweiten Strom umgeschaltet hat, eine Dauer erfasst wird, während welcher der durch den Leistungtransistor (Qs) fließende Momentanstrom auf dem zweiten Strom gehalten wird; und

wenn die Dauer, während welcher der durch den Leistungtransistor (Qs) fließende Momentanstrom auf dem zweiten Strom gehalten wird, einen zweiten Zeitschwellenwert erreicht, der durch den Leistungtransistor (Qs) fließende Momentanstrom gesteuert wird, auf den ersten Strom umzuschalten.

**20.** Treiberverfahren nach Anspruch 10, wobei

in der Zeitdauer, in welcher die Eingangsspannung (VBUS) höher als die Treiberspannung (VLED) für die LED-Last ist, der Momentanstrom, der durch den Leistungtransistor (Qs) fließt, gesteuert wird, zwischen einem ersten Strom und einem zweiten Strom umzuschalten, wobei der erste Strom größer als der zweite Strom ist; und basierend auf einem Vergleich zwischen dem Spannungsschwellenwert (Vth) und der Differenz zwischen der Eingangsspannung (VBUS) und der Treiberspannung (VLED) für die LED-Last eine jeweilige Dauer des ersten Stroms und des zweiten Stroms angepasst wird, sodass der Durchschnittsstrom eine Anforderung zum Antreiben der LED-Last in einem Fall erfüllt, in dem die Eingangsspannung (VBUS) variiert.

**21.** Treiberverfahren nach Anspruch 20, wobei

in einem Zyklus, in dem Fall, in dem die Eingangsspannung (VBUS) höher als die Treiberspannung ist, falls die Differenz zwischen der Eingangsspannung (VBUS) und der Treiberspannung (VLED) für die LED-Last kleiner als der Spannungsschwellenwert (Vth) ist, der Momentanstrom, der durch den Leistungtransistor (Qs) fließt, gesteuert wird, der erste Strom zu sein; und

falls die Differenz zwischen der Eingangsspannung (VBUS) und der Treiberspannung (VLED) für die LED-Last größer als der Spannungsschwellenwert (Vth) ist, der Momentanstrom, der durch den Leistungtransistor (Qs) fließt, gesteuert wird, der zweite Strom zu sein.

## Revendications

**1.** Circuit pilote pour piloter une charge de diode électroluminescente (DEL), le circuit pilote comprenant :

la charge de DEL ;

un transistor de puissance (Qs) connecté en série à la charge de DEL et configuré pour recevoir une tension d'entrée (VBUS) variant périodiquement ; et

un circuit de commande (51), **caractérisé en ce que** le circuit de commande (51) est configuré pour :

obtenir une tension entre deux extrémités de la charge de DEL, la tension entre deux extrémités de la charge de DEL étant une tension de pilotage (VLED) pour la charge de DEL ;

obtenir la tension d'entrée (VBUS) ; et

calculer une différence entre la tension d'entrée (VBUS) et la tension de pilotage (VLED) pour la charge de DEL ;

dans une période de temps dans laquelle la tension d'entrée (VBUS) est supérieure à la tension de pilotage (VLED) pour la charge de DEL, commander le transistor de puissance (Qs) pour qu'il fonctionne en un mode linéaire ; et

dans la période de temps, commander une modification d'un courant instantané circulant à travers le transistor de puissance (Qs) sur la base d'une différence entre la tension d'entrée (VBUS) et la tension de pilotage (VLED) pour la charge de DEL par une commande en boucle ouverte, sans calculer une erreur entre un courant moyen circulant à travers la charge de DEL et un courant souhaité, pour amener le courant moyen circulant à travers la charge de DEL à atteindre une exigence prédéfinie pour piloter la charge de DEL pour qu'elle émette une lumière ayant une luminosité souhaitée ;

dans lequel la commande de la modification du courant instantané circulant à travers le transistor de puissance (Qs) sur la base de la différence entre la tension d'entrée (VBUS) et la tension de pilotage (VLED) pour la charge de DEL par la commande en boucle ouverte comprend :

lorsque la différence entre la tension d'entrée (VBUS) et la tension de pilotage (VLED) pour la charge de DEL est une première différence, la commande du courant instantané circulant à travers le transistor de puissance (Qs) pour qu'il soit un premier courant ; et

lorsque la différence entre la tension d'entrée (VBUS) et la tension de pilotage (VLED) pour la charge de DEL est une seconde différence, la commande du courant instantané circulant à travers le transistor de puissance (Qs) pour qu'il soit un second courant, dans lequel la première différence est inférieure à la seconde différence et le premier courant est supérieur au second courant.

**2.** Circuit pilote selon la revendication 1, dans lequel le circuit de commande (51) comprend :
un circuit de génération de signal de pilotage (512) configuré pour générer un signal de pilotage (Vg) sur la base d'une différence entre la tension d'entrée (VBUS) et la tension de pilotage (VLED) pour la DEL, pour commander le transistor de puissance (Qs) de sorte que le courant instantané circulant à travers le transistor de puissance (Qs) dans une première période de temps soit commandé pour être inférieur au courant instantané circulant à travers le transistor de puissance (Qs) dans une seconde période de temps, dans lequel la différence entre la tension d'entrée (VBUS) et la tension de pilotage (VLED) pour la charge de DEL dans la première période de temps est supérieure à la différence entre la tension d'entrée (VBUS) et la tension de pilotage (VLED) pour la charge de DEL dans la seconde période de temps.

**3.** Circuit pilote selon la revendication 2, dans lequel le circuit de commande comprend :
un circuit de sélection (511) configuré pour : sélectionner l'un parmi des signaux de référence (VREF1-VREFn) représentant des valeurs souhaitées du courant instantané circulant à travers le transistor de puissance (Qs) sur la base de la différence entre la tension d'entrée (VBUS) et la tension de pilotage (VLED) pour la charge de DEL, et délivrer le signal de référence sélectionné (VREFm) au circuit de génération de signal de pilotage (512).

**4.** Circuit pilote selon la revendication 3, dans lequel le circuit de sélection (511) comprend :

des commutateurs agencés selon une correspondance biunivoque avec les signaux de référence (VREF1-VREFn) ; et
un circuit logique (72) configuré pour générer des signaux de commande pour commander des états de commutation des commutateurs (S1, S2) sur la base de la différence entre la tension d'entrée (VBUS) et la tension de pilotage (VLED) pour la charge de DEL.

**5.** Circuit pilote selon la revendication 3, comprenant en outre :
un circuit tampon (63) couplé entre le circuit de sélection (511) et le circuit de génération de signal de pilotage (512) et configuré pour prolonger une longueur de temps utilisée pour la commutation entre les signaux de référence (VREF1-VREFn).

**6.** Circuit pilote selon la revendication 2, dans lequel le circuit de génération de signal de pilotage (512) est configuré pour :

dans la période de temps dans laquelle la tension d'entrée (VBUS) est supérieure à la tension de pilotage (VLED) pour la charge de DEL, commander le courant instantané circulant à travers le transistor de puissance (Qs) pour qu'il soit commuté entre le premier courant et le second courant à l'aide du signal de pilotage ; et
ajuster des durées du premier courant et du second courant sur la base d'une comparaison entre un seuil de tension (Vth) et la différence entre la tension d'entrée (VBUS) et la tension de pilotage (VLED) pour la charge de DEL, de sorte que le courant moyen atteigne une exigence pour piloter la charge de DEL dans un cas où la tension d'entrée varie.

**7.** Circuit pilote selon la revendication 6, dans lequel circuit de génération de signal de pilotage (512) est configuré pour : dans un cycle, dans le cas où la tension d'entrée (VBUS) est supérieure à la tension de pilotage (VLED) pour la charge de DEL,

lorsque la différence entre la tension d'entrée (VBUS) et la tension de pilotage (VLED) pour la charge de DEL est inférieure au seuil de tension (Vth), le courant instantané circulant à travers le transistor de puissance (Qs) est commandé pour être le premier courant ; et
lorsque la différence entre la tension d'entrée (VBUS) et la tension de pilotage (VLED) pour la charge de DEL est supérieure au seuil de tension (Vth), le courant instantané circulant à travers le transistor de puissance (Qs) est commandé pour être le second courant.

**8.** Circuit pilote selon la revendication 6, dans lequel le circuit de commande comprend :
un circuit de temporisation (71) configuré pour : lorsque la durée du premier courant atteint une longueur de temps représentée par un premier seuil de temps, commander le courant instantané circulant à travers le transistor de puissance (Qs) pour qu'il commute du premier courant au second courant.

9. Circuit pilote selon la revendication 8, dans lequel le circuit de temporisation (71) est configuré pour : après que le courant instantané circulant à travers le transistor de puissance (Qs) a commuté du premier courant au second courant,
lorsque la durée du second courant atteint une longueur de temps représentée par un second seuil de temps, commander le courant instantané circulant à travers le transistor de puissance (Qs) pour qu'il commute du second courant au premier courant.

10. Procédé de pilotage pour piloter une charge de diode électroluminescente (DEL), **caractérisé en ce que** le procédé de pilotage comprend :

dans une période de temps dans laquelle une tension d'entrée (VBUS) variant périodiquement est supérieure à une tension de pilotage (VLED) pour la charge de DEL, la commande d'un transistor de puissance (Qs) connecté en série à la charge de DEL pour qu'il fonctionne en un mode linéaire ; et
dans la période de temps, la commande d'une modification du courant instantané circulant à travers le transistor de puissance (Qs) sur la base d'une différence entre la tension d'entrée (VBUS) et la tension de pilotage (VLED) pour la charge de DEL par une commande en boucle ouverte, sans calculer une erreur entre un courant moyen circulant à travers la charge de DEL et un courant souhaité, pour réduire une perte de conduction du transistor de puissance (Qs) et amener le courant moyen circulant à travers la charge de DEL à atteindre une exigence prédéfinie pour piloter la charge de DEL pour qu'elle émette une lumière ayant une luminosité souhaitée ;
dans lequel la commande de la modification du courant instantané circulant à travers le transistor de puissance (Qs) sur la base de la différence entre la tension d'entrée (VBUS) et la tension de pilotage (VLED) pour la charge de DEL par la commande en boucle ouverte comprend :

lorsque la différence entre la tension d'entrée (VBUS) et la tension de pilotage (VLED) pour la charge de DEL est une première différence, la commande du courant instantané circulant à travers le transistor de puissance (Qs) pour qu'il soit un premier courant ; et
lorsque la différence entre la tension d'entrée (VBUS) et la tension de pilotage (VLED) pour la charge de DEL est une seconde différence, la commande du courant instantané circulant à travers le transistor de puissance (Qs) pour qu'il soit un second courant, dans lequel la première différence est inférieure à la seconde différence et le premier courant est supérieur au second courant.

11. Procédé de pilotage selon la revendication 10, dans lequel
le courant instantané circulant à travers le transistor de puissance (Qs) dans une première période de temps est commandé pour être inférieur au courant instantané circulant à travers le transistor de puissance (Qs) dans une seconde période de temps, dans lequel la différence entre la tension d'entrée (VBUS) et la tension de pilotage (VLED) pour la charge de DEL dans la première période de temps est supérieure à la différence entre la tension d'entrée (VBUS) et la tension de pilotage (VLED) pour la charge de DEL dans la seconde période de temps.

12. Procédé de pilotage selon la revendication 10, dans lequel

un seuil de tension (Vth) correspondant à la différence entre la tension d'entrée (VBUS) et la tension de pilotage (VLED) pour la charge de DEL est défini ; et
le courant instantané circulant à travers le transistor de puissance (Qs) dans une première période de temps dans laquelle la différence entre la tension d'entrée (VBUS) et la tension de pilotage (VLED) pour la charge de DEL est supérieure au seuil de tension (Vth), est commandé pour être inférieur au courant instantané circulant à travers le transistor de puissance (Qs) dans une seconde période de temps dans laquelle la différence entre la tension d'entrée (VBUS) et la tension de pilotage (VLED) pour la charge de DEL est inférieure au seuil de tension (Vth).

13. Procédé de pilotage selon la revendication 12, dans lequel :

des courants de référence conformément à l'exigence prédéfinie sont définis ; et
le courant instantané circulant à travers le transistor de puissance (Qs) est commandé pour commuter entre les courants de référence sur la base d'une comparaison ente le seuil de tension (Vth) et la différence entre la tension d'entrée (VBUS) et la tension de pilotage (VLED) pour la charge de DEL.

**14.** Procédé de pilotage selon la revendication 12, dans lequel
pendant un demi-cycle dans lequel la tension d'entrée (VBUS) est dans une phase montante, le courant instantané circulant à travers le transistor de puissance (Qs) est commandé pour varier d'une valeur à une autre valeur selon une manière étagée.

**15.** Procédé de pilotage selon la revendication 14, dans lequel
pendant un demi-cycle dans lequel la tension d'entrée (VBUS) est dans une phase descendante, le courant instantané circulant à travers le transistor de puissance (Qs) est commandé pour être symétrique par rapport au courant instantané circulant à travers le transistor de puissance (Qs) pendant le demi-cycle dans lequel la tension d'entrée (VBUS) est dans la phase montante.

**16.** Procédé de pilotage selon la revendication 10, dans lequel
une longueur de temps pendant laquelle le courant instantané circulant à travers le transistor de puissance (Qs) commute d'une valeur à une autre valeur est prolongée pour améliorer une performance de compatibilité électromagnétique (EMC).

**17.** Procédé de pilotage selon la revendication 16, dans lequel
le courant instantané circulant à travers le transistor de puissance (Qs) est commandé pour varier de l'une valeur à l'autre valeur selon une manière en rampe.

**18.** Procédé de pilotage selon la revendication 10, dans lequel
lorsqu'une durée pendant laquelle le courant instantané circulant à travers le transistor de puissance (Qs) est maintenu au niveau d'un premier courant atteint un premier seuil de temps, le courant instantané circulant à travers le transistor de puissance (Qs) est commandé pour commuter vers un second courant, dans lequel le premier courant est supérieur au second courant.

**19.** Procédé de pilotage selon la revendication 18, dans lequel

après que le courant instantané circulant à travers le transistor de puissance (Qs) a commuté vers le second courant, une durée pendant laquelle le courant instantané circulant à travers le transistor de puissance (Qs) est maintenu au niveau du second courant est détectée ; et
lorsque la durée pendant laquelle le courant instantané circulant à travers le transistor de puissance (Qs) est maintenu au niveau du second courant atteint un second seuil de temps, le courant instantané circulant à travers le transistor de puissance (Qs) est commandé pour commuter vers le premier courant.

**20.** Procédé de pilotage selon la revendication 10, dans lequel

dans la période de temps dans laquelle la tension d'entrée (VBUS) est supérieure à la tension de pilotage (VLED) pour la charge de DEL, le courant instantané circulant à travers le transistor de puissance (Qs) est commandé pour commuter entre un premier courant et un second courant, dans lequel le premier courant est supérieur au second courant ; et
sur la base d'une comparaison entre le seuil de tension (Vth) et la différence entre la tension d'entrée (VBUS) et la tension de pilotage (VLED) pour la charge de DEL, les durées du premier courant et du second courant sont ajustées, de sorte que le courant moyen atteigne une exigence pour piloter la charge de DEL dans un cas où la tension d'entrée (VBUS) varie.

**21.** Procédé de pilotage selon la revendication 20, dans lequel

dans un cycle, dans le cas où la tension d'entrée (VBUS) est supérieure à la tension de pilotage,
si la différence entre la tension d'entrée (VBUS) et la tension de pilotage (VLED) pour la charge de DEL est inférieure au seuil de tension (Vth), le courant instantané circulant à travers le transistor de puissance (Qs) est commandé pour être le premier courant ; et
si la différence entre la tension d'entrée (VBUS) et la tension de pilotage (VLED) pour la charge de DEL est supérieure au seuil de tension (Vth), le courant instantané circulant à travers le transistor de puissance (Qs) est commandé pour être le second courant.

**BR** VBUS

Vac

Vref

Vcomp Drive signal
generating circuit 13 Vg Qs

Compensation
circuit 12 Averaging
circuit 11 Vs Rs

Co LED

**Figure 1**

| In a time period in which an input voltage is higher than a driving voltage for an LED load, control a power transistor connected in series with the LED load to operate in a linear mode | S21 |

| In the time period in which the input voltage is higher than the driving voltage, control a current flowing through the power transistor based on a difference between the input voltage and the driving voltage, without calculating an error between an average current flowing through the LED load and a desired current | S22 |

**Figure 2A**

**Figure 2B**

**Figure 3**

**Figure 4**

**Figure 5**

**Figure 6**

EP 3 675 603 B1

**Figure 7**

29

**EP 3 675 603 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2018310376 A1